# DEMANDE DE BREVET EUROPEEN

(11) **EP 0 642 867 A1**
(43) Date de publication de la demande: **15.03.1995**
(21) Numéro de dépôt: 94114060.0
(22) Date de dépôt: 08.09.1994
(51) Int. Cl.: B23H 11/00, B23H 7/26

(54) **Structure pour machine d'électroérosion**

(30) Priorité: 10.09.1993 CH 2715/93
(71) Demandeur: CHARMILLES TECHNOLOGIES S.A., CH-1217 Meyrin 1 (CH)
(72) Inventeur: Girardin, Roger, CH-1214 VERNIER (CH)

(57) **Abrégé**

Machine d'électroérosion avec une tête d'usinage comportant une broche tournante destinée à entraîner en rotation l'électrode-outil; l'un au moins des charriots d'un système à mouvements croisés destiné à la déplacer selon les axes X et Y est monté sur une traverse prenant appui sur deux épaulements disposés de part et d'autre de la zone de travail et est évidé au centre afin de laisser passer une gaine dans laquelle est monté le dispositif pour déplacer la tête d'usinage selon l'axe Z; la traverse présente elle-même une ouverture destinée à laisser la liberté à ce dispositif de se déplacer en suivant les mouvements du premier chariot; un deuxième moyen est prévu pour déplacer selon l'autre des axes X et Y, soit la traverse, soit le dispositif pour déplacer la tête d'usinage selon l'axe Z. Le dispositif du mouvement Z peut traverser la superposition des deux chariots du système à mouvements croisés, de façon que l'axe Z soit confondu avec le centre de symétrie de l'un de ces chariots.

Le bâti peut former un cube délimité par quatre parois verticales, la traverse évidée constituant la face supérieure du cube et reposant sur quatre piliers formant les arêtes de ce cube, au moins certaines des quatre parois verticales étant largement évidées de manière à rendre accessible la zone de travail.

## Description

La présente invention concerne la structure d'une machine d'électroérosion, en particulier de fraisage par électroérosion. Rappelons en quoi consiste cette dernière technique : on usine une cavité ou un relief à trois dimensions en évidant l'électrode-pièce, de préférence à grande vitesse, avec une électrode-outil rotative, de forme simple et indépendante du contour souhaité. On peut éventuellement procéder par couches successives avec compensation de l'usure des électrodes-outil selon la méthode décrite dans la demande (E. 224) ou EP 555 818 de la demanderesse. Il s'agit d'un usinage à fort taux d'usure; la longueur des électrodes-outil de forme simple diminue rapidement, mais sans usure latérale apparente. La géométrie du volume tridimensionnel à évider a été mémorisée sous forme d'une superposition de feuillets (ou couches) virtuelles parallèles. L'extrémité active de l'électrode-outil décrit des mouvements de va-et-vient, ou autres, dans le plan de chacun de ces feuillets, de manière à les éroder successivement jusqu'au fond de la cavité à usiner. Elle avance le long d'un chemin d'outil plan dit "à usure nulle", dont les coordonnées selon les axes X et Y ont été mémorisées également.

Comme en enfonçage, contournage ou perçage EDM, l'outil est serré dans un porte-outil verrouillé sur une tête d'usinage rotative et mobile selon l'axe Z, tandis que la pièce à usiner est posée et serrée sur une table de travail fixe ou non par rapport au bâti de la machine. Le mouvement relatif (mouvement X,Y) entre la tête d'usinage (et l'outil) et la pièce à usiner est obtenu en général grâce à un système à mouvements croisés. Les machines EDM connues présentent toutes sortes de variantes:
- la tête est fixe selon les axes X et Y et c'est la pièce à usiner et sa table de travail, montées sur un système à mouvements croisés selon les axes X et Y qui se déplace;
- la pièce à usiner et sa table de travail sont fixes et c'est le dispositif mobile selon l'axe Z, sur lequel est fixée la tête d'usinage ainsi que les organes actionnant la rotation de l'outil, qui eat actionné par un système à mouvements croisés selon les axes X et Y ;
- la tête se déplace par exemple selon l'axe X, le long du fronton d'un portique monté sur le socle, de part et d'autre de la zone de travail; c'est le portique ou la pièce à usiner et sa table de travail qui se dépace selon l'axe Y.

La plupart des machines EDM sont maintenant équipées d'une unité de commande numérique contrôlant l'avance en Z de la tête d'usinage ainsi que ce mouvement relatif selon X,Y entre l'outil et la pièce.

Mais, contrairement à l'enfonçage classique, le fraisage EDM est réalisé en général avec un courant d'usinage de très forte densité (parfois une ou plusieurs centaines d'ampères/cm²), et avec de très grandes vitesses de rotation de l'électrode-outil (un ou plusieurs milliers de tours/mn). Par contre, celle-ci est en général un cylindre de faible diamètre pouvant être creux; elle est donc très légère par comparaison avec les outils utilisés habituellement en enfonçage classique. De plus, l'extrémité active de l'électrode-outil se déplace selon un va-et-vient ou une spirale dans le plan de chacun de ces feuillets, donc avec de brusques changements de direction. Enfin, pour pouvoir usiner sans usure latérale apparente on travaille avec un très fort taux d'usure (par exemple de 20 à 50 %); les vitesses d'avance sur les chemins d'outil sont beaucoup plus grandes qu'en enfonçage planétaire ou contournage, par exemple; elles peuvent être de l'ordre de 10 mm/sec . Signalons que la chaleur dégagée est également plus importante.

Les contraintes ne sont donc pas les mêmes qu'en enfonçage classique et se rapprocheraient parfois de celles rencontrées en électroérosion par fil ou en perçage EDM.

Le but de la présente invention était de trouver une disposition des axes X, Y et Z mieux adaptée à ce nouveau type de contraintes que les structures connues, en particulier avec le moins de masse à déplacer et la plus grande symétrie possible et qui évite tout porte-à-faux. Une telle structure, objet de la présente invention est définie aux revendications 1 à 4.

Elle a été développée par la demanderesse en relation avec le fraisage EDM par couches, mais peut être aussi très avantageusement utilisée pour d'autres types d'usinage où sont requises une bonne maîtrise des déplacements de l'outil, une stabilité et compacité du bâti et une bonne accessibilité de la zone d'usinage.

Ceci imposait le choix d'une stucture
- avec pièce à usiner fixe (afin qu'aucun chariot ou coulisseau de système à mouvements croisés selon les axes X et Y n'ait à se déplacer en supportant la masse d'un bac plein de diélectrique et d'une pièce à usiner éventuellement de poids important;);
- de type portique, afin de limiter les portes-à-faux et car il est bien connu de l'homme du métier qu'une construction en portique est plus rigide, plus stable, moins sensible aux vibrations qu'une structure en C.

En effet, rappelons que les machines d'électroérosion connues présentent deux types de structure: à colonne (ou "en C") ou à portique. Dans les deux cas, le bâti comporte un socle qui supporte le bac de travail.
Dans la structure en C, une colonne verticale est liée de façon rigide à ce socle, et une console portant le chariot mobile selon Z sur lequel est fixée la tête d'usinage ainsi que les organes actionnant la rotation de l'outil, est montée en porte-à-faux sur cette colonne. Le système à mouvements croisés selon les axes x et Y repose en général sur le socle, sous le bac de travail (c'est la pièce à usiner qui est mobile); ce système peut aussi être intégré à la colonne (seule la tête d'usinage est mobile), soit à l'extrémité du chariot mobile portant la tête d'usinage, soit à l'endroit où il est rattaché à la colonne.
Dans la structure en portique, deux colonnes ou épaulements s'élèvent de part et d'autre du socle et sont liés de façon rigide à une traverse sur laquelle est monté le chariot mobile selon Z sur lequel est fixée la tête d'usinage ainsi que les organes actionnant la rotation de l'outil, ce dernier surplombant la zone d'usinage et le bac de travail. En général ce chariot est aussi mobile le long de la traverse, selon l'axe X. Soit c'est la pièce à usiner qui est mobile selon l'axe Y, soit le portique, afin d'amener la pièce sous la tête d'usinage.

Or, contrairement à la tradition respectée jusqu'à ce jour en électroérosion, que ce soit dans les structures à colonne ou à portique, selon laquelle la console portant le chariot mobile selon Z sur lequel est fixée la tête d'usinage ainsi que les organes actionnant la rotation de l'outil, est soit fixe, soit montée au bout de l'un des chariots mobiles horizontalement selon les axes X et Y, l'objet de la présente invention est une structure nouvelle, telle que définie aux revendications 1 à 4, dans laquelle le dispositif actionnant verticalement la tête d'usinage selon l'axe Z traverse au moins l'un de ces chariots. L'ensemble constitué par ce dispositif et le chariot qu'il traverse est monté "sur le toit du bâti de la machine", au dessus d'une traverse surplombant la zone de travail et montée sur au moins deux épaulements situés de part et d'autre de cette zone.

Ainsi le dispositif actionnant verticalement la tête d'usinage selon l'axe Z est monté symétriquement par rapport aux points d'appuis de la traverse; ceci reste vrai si le bâti est réalisé en forme de cube, comme décrit dans la demande de brevet parallèle (E. 228 B); la traverse est alors en fait la face supérieure du cube et le dispositif est monté symétriquement par rapport aux quatre points d'appuis de la traverse, constitués par les arêtes du cube.
Une machine présentant une telle structure symétrique résiste mieux aux déformations thermiques; si elles ont lieu elles sont symétriques et ont donc moins de conséquences sur la précision; de plus, au moins deux des dispositifs actionnant la tête d'usinage selon les trois axes X, Y, Z de référence étant disposés "sur le toit" du bâti et donc loin de la zone d'usinage, ils sont beaucoup moins affectés par la chaleur dégagée dans cette zone.

Tout porte-à-faux est évité; la machine absorbe mieux les vibrations dues aux grandes vitesses de rotation de l'électrode; la précision et la fiabilité de l'usinage en sont améliorées, ainsi que le confort de l'utilisateur, car le bruit est pratiquement supprimé, malgré les grandes vitesses de rotation utilisées;

La pièce et donc le bac étant fixes, celà élimine tout problème de débordement du diélectrique hors du bac de travail lors de mouvements relatifs rapides et surtout des accélérations selon X, Y, usuels en fraisage EDM. Mais surtout, comme pour toute machine à pièce fixe, la précision de l'usinage et sa reproductibilité est pratiquement indépendante des dimensions et du poids de la pièce à usiner.
Surtout, en particulier par suite de la réduction des masses en mouvement et des moments d'inertie, la structure selon la présente invention
- permet d'obtenir les performances dynamiques requises pour les déplacements trés rapides, les ralentissements ou accélérations ou même les arrêts brusques qui sont fréquents lors des trajets en balayages usuels en fraisage; une variante où on utilise des céramiques pour le système à mouvements croisés X et Y permet d'augmenter cesperformances en diminuant encore les masses en mouvement;
- elle permet aussi une meilleure précision dans le positionnement.

Ajoutons qu'une structure selon la présente invention avec au moins au moins deux des dispositifs actionnant la tête d'usinage selon les trois axes X, Y, Z de référence disposés "sur le toit" du bâti, libére donc les abords de la zone d'usinage; la machine est ainsi beaucoup plus compacte et présente une zone d'usinage plus accessible, car deux côtés au moins sont entièrement dégagés, par suite de la disposition en hauteur des mouvements x et Y souvent encombrants.
Un autre avantage est que les mouvements selon X et Y ne sont limités par aucun obstacle latéral.

La structure selon la présente invention a une variante particulièrement interessante, dans laquelle le dispositif du mouvement Z traverse les deux chariots des mouvements X et Y disposés sur la traverse; l'axe Z est ainsi confondu avec le centre de symétrie de l'un de ces chariots, tandis qu'il garde toujours un point commun avec l'autre axe. Cette disposition renforce encore la symétrie de la machine, et surtout diminue au maximum les moments d'inerties selon les axes de déplacement, renforçant ainsi les avantages déjà mentionnés ci-dessus.

Dans ce qui suit, l'invention est exposée plus en détail à l'aide du dessin représentant deux des modes d'exécution à titre de simple exemple non limitatif. La machine ainsi représentée peut recevoir toutes modifications de forme et de détail sans pour cela se départir de l'esprit de l'invention.

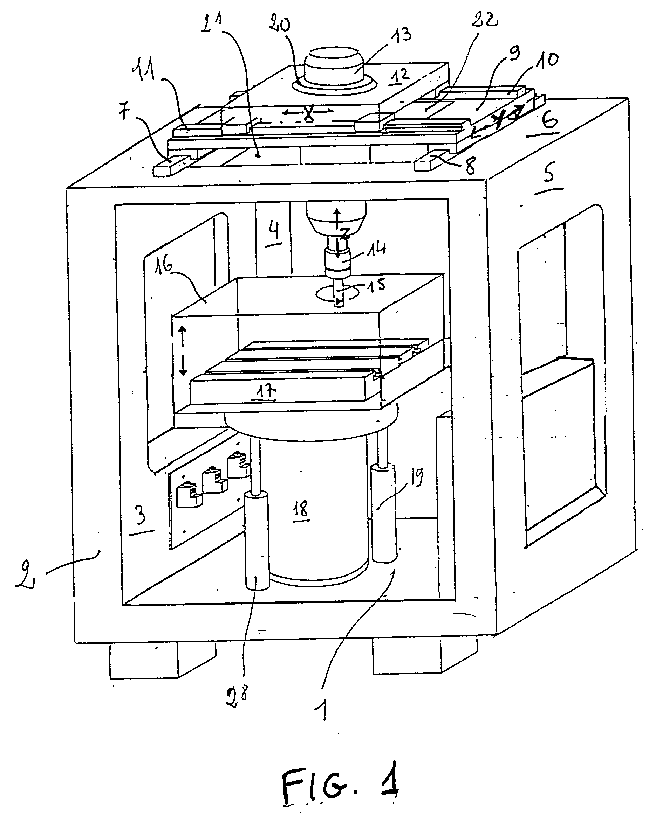

La fig. 1 est une perspective simplifiée de la face frontale et de l'un des côtés du bâti d'une machine selon la présente invention; ce bâti est en forme de cube. Son socle 1 est constitué par la face inférieure de ce cube. Les 4 parois 2 et 5 constituées chacune par l'une des faces latérales de ce cube sont largement évidées tout en conservant suivant les arêtes du cube, quatre pilers sur lesquels s'appuie la face supérieure 6.

La face supérieure 6 présente deux rails 7 et 8 sur lesquels coulisse le charriot 9 correspondant au mouvement selon l'axe Y. Ce chariot 9 présente deux rails 10 et 11 sur lesquels coulisse le chariot 12 correspondant au mouvement selon l'axe X. Ce chariot 12 est évidé selon un cercle et comporte des moyens 20 pour retenir la gaine cylindrique 13 du mouvement selon l'axe Z. La face 6 et le chariot 9 comportent chacun un évidement 21, respectivement 22, appropriés pour laisser la liberté à cette gaine 13 de se déplacer selon X et Y en suivant les mouvements de ces chariots 9 et 12.
Ces rails 7, 8, 10 et 11 sont de préférence précontraints, servent à guider le mouvement de coulisseaux de type connu, montés à la face inférieure des chariots 9 et 12. Ces rails et coulisseaux ont une grande rigidité et permettent une découpe précise et reproductible.
Un soufflet (non représenté) isole la broche tournante, montée dans la gaine 13, et donc non visible au dessin, du liquide d'usinage aspergé depuis la tête d'usinage pour refroidir la zone d'usinage et évacuer les déchets de l'électroérosion, ainsi que des vapeurs et fumées s'élevant du bain d'usinage. Cette gaine 13 contient aussi la tête d'usinage et les organes de l'axe Z, (de type connu, faisant coulisser la tête d'usinage supérieure le long d'une crémaillère disposée selon l'axe Z).
Cette broche tournante est munie de moyens (non représentés) pour verrouiller le porte-outil 14 serrant un outil 15.
Des parois protectrices, éventuellement transparentes, amovibles (non représentées) peuvent refermer, en général pendant un usinage, les ouvertures ménagées dans les parois 2 à 5.

Grâce aux systèmes hydrauliques ou pneumatiques 28 et 19 (le troisième, caché par la colonne 18 n'étant pas représenté), le bac de travail 16 peut coulisser vers le bas le long de la colonne 18; cette dernière supporte la table de travail 17 destinée à maintenir la piéce (non représentée ainsi que ses moyens de fixation).

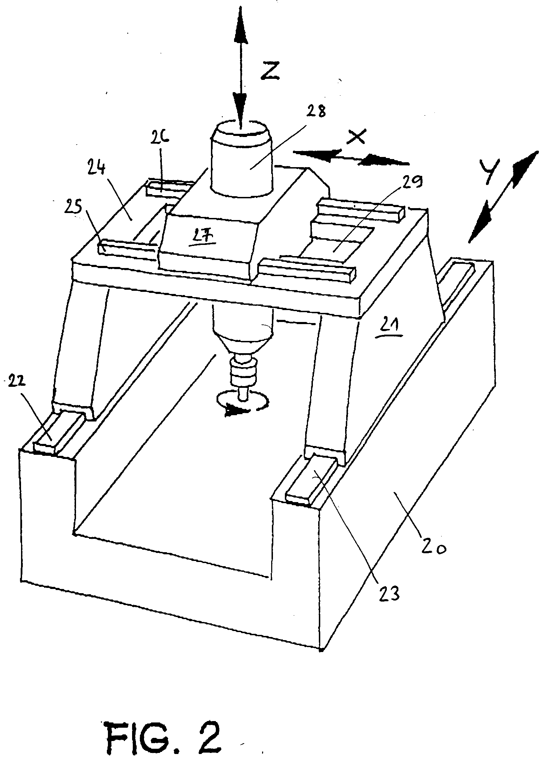

La fig. 2 est une perspective simplifiée de la face frontale et de l'un des côtés du bâti d'une autre machine selon la présente invention; ce bâti est constitué par un socle 20 muni des rails 22 et 23 sur lesquels coulisse le portique 21. La traverse 24 de ce portique 21 présente deux rails 25 et 26 sur lesquels coulisse un chariot 27. Ce chariot 27 est évidé selon un cercle et comporte des moyens (non montrés au dessin) pour retenir la gaine cylindrique 28 du mouvement selon l'axe Z. La traverse 24 comporte un évidement 29 appropriés pour laisser la liberté à cette gaine 28 de se déplacer selon l'axe X en suivant les mouvements de ce chariot 27.

## Revendications

1. Machine d'électroérosion permettant d'usiner une pièce à usiner stationnaire avec un régime à fort taux d'usure, comportant une broche tournante fixée sur la tête d'usinage de la machine et destinée à entraîner en rotation l'électrode-outil, un dispositif pour déplacer cette tête et donc l'outil selon l'axe Z, monté sur une traverse prenant appui sur deux épaulements disposés de part et d'autre de la zone de travail, ainsi qu'un système à mouvements croisés constitués par deux moyens destinés chacun à déplacer la tête d'usinage selon l'un des axes X et Y, dans laquelle
- un premier moyen destiné à faire coulisser un premier chariot selon l'un des axes X et Y est monté sur cette traverse, ce premier chariot étant évidé au centre afin de laisser passer une gaine dans laquelle est monté le dispositif pour déplacer la tête d'usinage selon l'axe Z, et la traverse présentant elle-même une ouverture destinée à laisser la liberté à ce dispositif de se déplacer en suivant les mouvements du premier chariot,
- un deuxième moyen destiné à déplacer selon l'autre des axes X et Y, soit la traverse, soit le dispositif pour déplacer la tête d'usinage selon l'axe Z, étant aussi prévu sur cette machine.

2. Machine d'électroérosion selon la revendication 1, dans laquelle le deuxième moyen est destiné à faire coulisser un deuxième chariot selon l'autre des axes X et Y et est monté sur le premier chariot, le dispositif du mouvement Z traversant la superposition des deux chariots du système à mouvements croisés, de façon que l'axe Z soit confondu avec le centre de symétrie de l'un de ces chariots, tandis qu'il garde toujours un point commun avec l'axe correspondant au deuxième chariot.

3. Machine d'électroérosion selon la revendication 2, dans laquelle la traverse reste fixe par rapport au bti de la machine.

4. Machine d'électroérosion selon la revendication 1, dans laquelle le deuxième moyen est destiné à faire coulisser la traverse selon l'autre des axes X et Y.

5. Machine d'électroérosion selon la revendication 1, dans laquelle, son bâti formant un cube délimité par quatre parois verticales, la traverse évidée supportant l'ensemble constitué par le premier chariot traversé par le dispositif pour déplacer la tête d'usinage selon l'axe Z, constitue la face supérieure du cube et repose sur quatre piliers formant les arêtes de ce cube, au moins certaines des quatre parois verticales étant largement évidées de manière à rendre accessible la zone de travail.
